# FASCICULE DE BREVET EUROPEEN

(11) **EP 1 018 113 B1**
(45) Date de publication et mention de la délivrance du brevet: **14.01.2004**
(21) Numéro de dépôt: 98945358.4
(22) Date de dépôt: 22.09.1998
(51) Int. Cl.: G11B 7/007, G11B 23/28, G11B 20/00

(54) **DISQUE D'ENREGISTREMENT ANTI-PIRATAGE et PROCEDE DE LECTURE**
AUFZEICHNUNGSPLATTE MIT KOPIERSCHUTZ und WIEDERGABEVERFAHREN
ANTI-CHIPPING RECORDING DISC and READING METHOD

(30) Priorité: 26.09.1997 FR 9711986
(43) Date de publication de la demande: 12.07.2000
(73) Titulaire: Thales, 75008 Paris (FR)
(72) Inventeur: PIROT, François-Xavier, Thomson-CSF P.I., 94117 Arcudeil Cedex (FR); LEHUREAU, Jean-Claude, Thomson-CSF P.I., 94117 Arcudueil Cedex (FR)
(74) Mandataire: Albert, Claude
(86) Numéro de dépôt international: PCT/FR1998/002034
(87) Numéro de publication internationale: WO 1999/017281

(56) Documents cités:
- EP-A- 0 523 334
- EP-A- 0 545 472
- US-A- 4 449 212
- US-A- 4 459 690
- PATENT ABSTRACTS OF JAPAN vol. 011, no. 103 (P-562), 2 avril 1987 & JP 61 253648 A (NIPPON TELEGR & TELEPH CORP), 11 novembre 1986
- PATENT ABSTRACTS OF JAPAN vol. 011, no. 197 (P-589), 25 juin 1987 & JP 62 020151 A (NIPPON TELEGR & TELEPH CORP), 28 janvier 1987
- PATENT ABSTRACTS OF JAPAN vol. 1997, no. 07 31 Juillet 1997 & JP 09 081 938 A (MATSUSHITA ELECTRIC IND CO LTD) 28 Mars 1997
- PATENT ABSTRACTS OF JAPAN vol. 1996, no. 10 31 Octobre 1996 & JP 08 147 767 A (VICTOR CO OF JAPAN LTD) 07 Juin 1996
- PATENT ABSTRACTS OF JAPAN vol. 1996, no. 07 31 Juillet 1996 & JP 08 077 566 A (MATSUSHITA ELECTRIC IND CO LTD) 22 Mars 1996

## Description

L'invention concerne un disque d'enregistrement anti-piratage et un procédé d'enregistrement et de lecture d'un tel disque. L'invention est applicable notamment dans le domaine des disques optiques et des disques magnéto-optiques.

Les compacts disques de type CD-ROM et les DVD (Digital-Video Disques) sont utilisés pour diffuser toutes sortes d'informations (données, programmes). Traditionnellement, ces disques ne craignaient pas le piratage des données, car leur capacité était supérieure à celle de la plupart des moyens de stockage du marché. Avec l'apparition d'une part de disques durs de grande capacité, et d'autre part de graveurs de CD-ROM à faible prix, cette situation est totalement modifiée. La duplication des données est maintenant à la portée des semi-professionnels ou même des amateurs.

Pour essayer de remédier à cet inconvénient, on a cherché à imaginer des structures ou fonctions pour empêcher la copie non autorisée des disques. Une telle solution est décrite par exemple dans la demande de brevet japonais JP 09-081938. Cette demande décrit un disque optique dont la piste principale en forme de spirale est interrompue sur deux tours successifs et remplacée sur une certaine longueur par un tronçon disposé à un demi-pas de piste des tours interrompus. Des signaux de saut d'un demi-pas de piste sont enregistrés pour permettre la lecture correcte de la piste principale en passant en série par la lecture du tronçon. Une structure analogue est décrite dans la demande de brevet japonais JP8077566. Cependant, cette structure oblige à utiliser des lecteurs capables d'effectuer des sauts d'un demi-pas, donc non standard. Les documents ont servi de base au préambule de la revendication 11.

La demande de brevet japonais JP8147767 pallie cet inconvénient grâce à la mise en oeuvre d'une piste secondaire insérée entre deux tours de la piste principale, en parallèle avec celle-ci, la piste secondaire contenant des informations spécifiques de sécurité, les informations propres à l'application étant inscrites séquentiellement sur la piste principale. Le dernier document a servi de base au préambule de la revendication 1.

Sur les différents supports d'enregistrement, du disque dur au disque optique et à la bande magnétique, l'information est regroupée en éléments généralement appelés blocs. Quelque part sur le même support est enregistré une table de contenu attribuant les blocs aux différents fichiers. Par exemple, les blocs d'un CD-Digital Audio (DA) sont attribués à chacun des morceaux de musique enregistrés à travers cette table de contenu. De même, les blocs d'un CD-ROM sont attribués chacun à des fichiers informatiques concernés. Chaque numéro de bloc contient un jeu de données, le but étant que le jeu de données retrouvées reproduisent parfaitement celles qui ont été enregistrées, les mêmes à chaque accès. Des codes correcteurs d'erreurs interviennent pour ramener le taux d'erreur inévitable à une valeur acceptable dans l'application considérée.

Sur un disque classique, les informations sont inscrites de manière séquentielle sur une spirale. Les différentes adresses sont disposées selon un ordre numérique. La lecture des informations se fait donc séquentiellement. L'invention concerne un disque d'enregistrement dans lequel, contrairement à l'art antérieur, la lecture ne peut pas se faire de façon séquentielle sur une piste unique.

L'invention fournit une solution permettant de détecter un enregistrement qui a été copié frauduleusement et même de rendre cet enregistrement inutilisable.

L'invention concerne donc un disque d'enregistrement optique d'informations, tel que défini dans les revendications 1 à 19.

L'invention concerne aussi des procédés de lecture de tels disques, tels que définis dans les revendications 20 à 23.

Les différents objets et caractéristiques de l'invention apparaîtront plus clairement dans la description qui va suivre et dans les figures annexées qui représentent :
- la figure 1, un exemple de disque d'enregistrement à deux pistes d'enregistrement en spirales selon l'invention ;
- les figures 2a à 2e, des exemples d'aiguillages de la piste principale vers la piste secondaire ;
- la figure 3, un exemple d'adressage des pistes principales et secondaires ;
- la figure 4, un dispositif de tête de lecture permettant d'inscrire deux pistes sur un disque ;
- les figures 5a, 5b, une variante de réalisation selon l'invention.

Sur un disque optique, de façon classique, les informations sont inscrites sur une piste en forme de spirale. Le lecteur suit cette spirale pour récupérer les informations. S'il a besoin de données éloignées du point où se trouve la tête optique, il se déplace d'une distance déterminée par la position d'origine et la table de contenu (Table Of Content, TOC), puis recherche finement la zone demandée en tenant compte des informations de numéros de secteurs lues. Selon l'invention on introduit en au moins une zone du disque au moins une piste secondaire parallèle à la piste principale et qui est donc imbriquée avec la première. Normalement, lors de la lecture, le lecteur se positionnera sur la piste principale ou sur une piste secondaire de manière aléatoire.

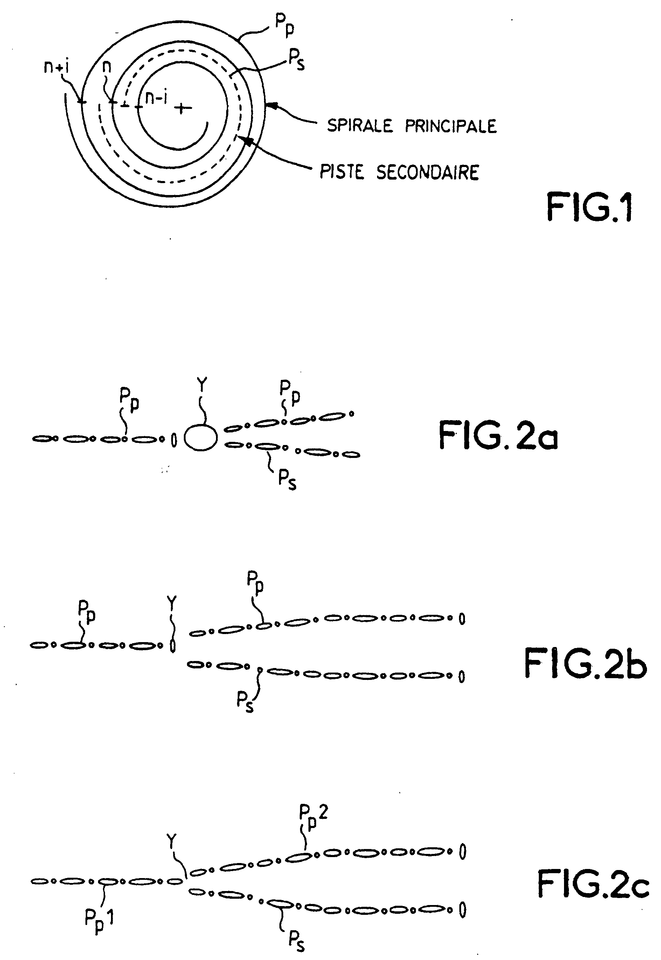

Selon les figures 2a à 2c, la piste secondaire Ps peut être raccordée à la piste principale Pp par un aiguillage en « Y ». Sur la figure 2a, le point d'aiguillage est constitué par un élément Y de suivi de piste de grande dimension. Sur la figure 2b cet élément Y est plus large à l'embranchement. Sur la figure 2c, la piste principale Pp1 est interrompue et se poursuit par la piste principale Pp2 légèrement désaxée par rapport à la piste Pp1. La piste secondaire Ps est symétrique de Pp2 par rapport à l'axe de Pp1.

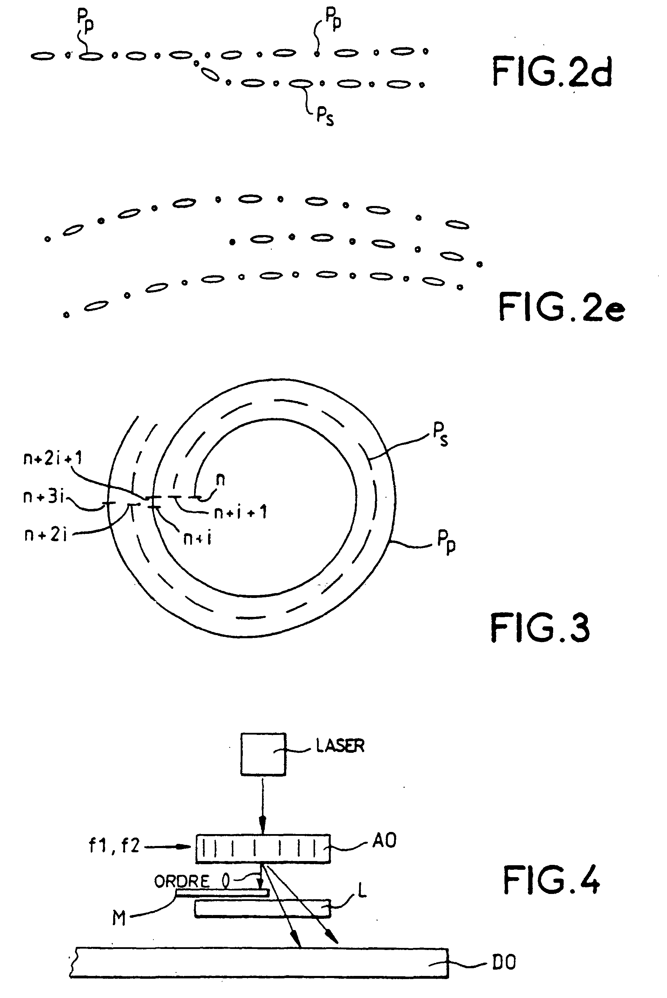

Selon la figure 2d, il n'y a pas de symétrie entre la piste secondaire et la piste principale. La piste principale, par exemple, n'a pas de changement de direction et c'est la piste secondaire qui se raccorde sur la piste principale.

L'introduction du positionnement aléatoire peut venir du dessins d'une bifurcation à un certain niveau de la piste, le lecteur choisissant l'une ou l'autre branche en cours de lecture suivant l'état instantané du signal de suivi de piste.

Selon la figure 2e, il n'y a pas de raccordement entre la piste principale et la piste secondaire ; celle-ci est simplement placée en parallèle avec la piste principale.

Le gestionnaire de lecture du lecteur se chargera de lire aussi bien la piste secondaire que la piste principale. Cela sera expliqué plus en détail dans la suite de la description.

Selon l'invention, on prévoit également d'inscrire des données différentes sur la piste secondaire et sur la piste principale: Dans ces conditions, il sera aisé de reconnaître un disque d'origine et un disque copié.

En effet, le fait de recopier le disque ne permet pas de dupliquer à la fois la piste secondaire et la piste principale. Le système de copie prend en compte un et un seul jeu de données. De plus, même si un informaticien ayant compris le dispositif lit un grand nombre de fois le secteur codé afin d'avoir accès aux deux jeux d'informations, il ne dispose pas d'un dispositif permettant de reproduire le comportement aléatoire évoqué.

De plus, non seulement il sera possible de détecter une copie d'un tel disque, mais en prévoyant sur la piste secondaire des données nécessaires au fonctionnement des logiciels du disque, il est possible de rendre une telle copie inutilisable.

Pour la gestion d'un tel disque, on peut prévoir que la piste secondaire contient un ou plusieurs blocs d'informations. L'adresse de début de bloc peut être égale à une adresse de début de bloc située sur une piste principale qui lui est voisine. Plus précisément, elle peut être située sensiblement sur le même rayon du disque.

Selon une autre variante, la piste secondaire contient des blocs dont les adresses ne sont pas contenues sur la piste principale. La lecture des blocs successifs du disque imposera donc la lecture des blocs de la piste secondaire.

Le disque de l'invention en prévoyant une ou plusieurs pistes secondaires imbriquées dans la spirale de la piste principale ne peut être reproduit intégralement et permet de rendre détectable les copies « pirates » voire de les rendre inutilisables.

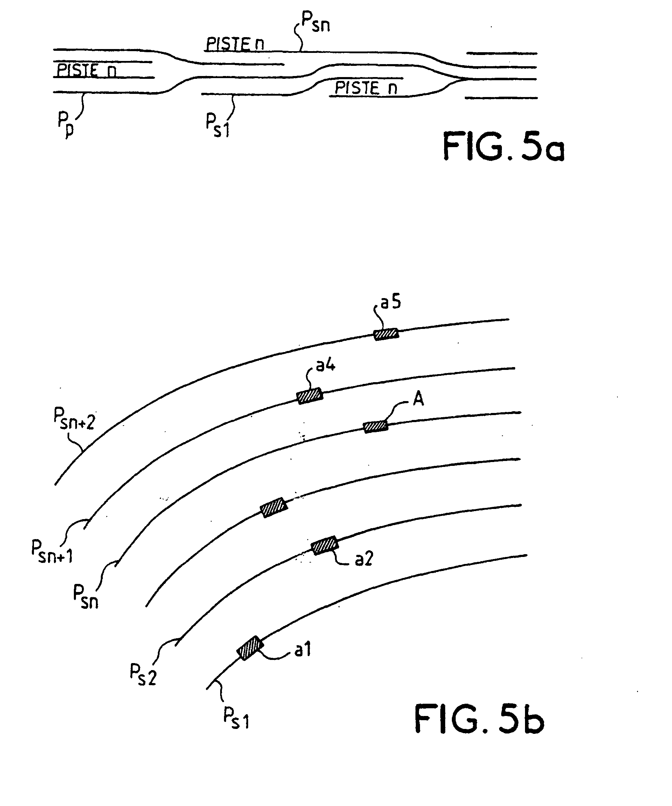

Selon une autre variante, le disque comprend au moins une zone avec un grand nombre de segments de pistes discontinus ou non, qui peuvent être enchevêtrés. Un exemple de cette configuration est présenté figure 5a. A titre d'exemple, le CD-ROM est constitué de près de 300 000 blocs de 2 koctets. La zone modifiée peut comprendre un nombre de bifurcations de l'ordre de grandeur du nombre de blocs, c'est-à-dire que chaque bloc peut être suivi par une continuation (tout droit, à droite ou à gauche) ou par une interruption du sillon.

L'analyse de cette zone modifiée à l'aide d'un dispositif de type lecteur optique peut prendre un temps très long et même être contrée par le mauvais positionnement et la répétition des numéros de bloc. Par exemple, les segments de piste peuvent porter des adresses de bloc qui ne sont pas strictement dans l'ordre de leur position physique, contrairement à la règle usuelle. Par ailleurs, le champ nécessaire pour remonter à la topographie des secteurs sur le disque est tel qu'il est quasiment impossible d'accéder à la topographie du disque par des moyens optiques.

Seule une information sur la topographie du disque suivant l'invention permet d'accéder à tous les segments, et donc à toutes les informations.

Pour la fabrication d'un tel disque, deux ou trois faisceaux peuvent inscrire (ou non) des pistes spirales en parallèle. Afin de conserver le fonctionnement normal des lecteurs de disques, le pas des deux spirales peut être augmenté afin de conserver un espacement égal à celui imposé par les règles standard (1,6 µm pour les CD-ROM, 0,65 µm pour la première génération de DVD).

Les machines utilisées actuellement pour la fabrication des masters ne gravent qu'un sillon lors de la rotation du disque, le faisceau se déplaçant radialement de manière synchrone avec la rotation. Une modification de ces machines de fabrication de masters est donc nécessaire. D'une part, le pas variable des différentes spirales implique de contrôler le déplacement radial du laser de gravure avec une vitesse variable dans le temps. D'autre part, un composant acousto-optique servant à moduler le faisceau peut être utilisé avec deux ou trois fréquences différentes, mais suffisamment proches pour être commandées à partir d'un circuit électronique classique. La séparation des deux directions et de l'ordre zéro entraîne également une modification de l'optique de focalisation. La figure 4 fournit de façon simplifiée un tel système dans lequel un transducteur acousto-optique AO recevant un faisceau laser le module avec deux fréquences f1 et f2 ou plus. Deux faisceaux déviés angulairement permettent alors de graver deux pistes soit simultanément, soit ultérieurement de manière à réaliser une ou deux pistes parallèles. Le faisceau non défléchi (ordre 0) est bloqué par le masque M.

Entre le transducteur acousto-optique AO est prévu un dispositif L qui focalise les faisceaux sur le disque. De plus, ce dispositif peut comprendre des moyens pour bloquer la transmission du faisceau d'ordre transmis par le dispositif acousto-optique AO.

On va maintenant décrire la lecture d'un tel disque possédant au moins une piste secondaire.

Tout d'abord considérons le cas où la piste secondaire est imbriquée dans la spirale de la piste principale comme cela est représenté en figure 1 et que les numéros de blocs (ou adresses physiques) de cette piste secondaire sont différentes de celles de la piste principale.

Si on suppose que l'adresse physique n soit donnée à un bloc de la piste secondaire et à un bloc de la piste principale, lorsque le système de lecture demande d'aller lire cette adresse n, selon le fonctionnement courant des lecteurs, il est procédé à une recherche rapide par lecture des numéros de blocs puis par une recherche plus fine, par exemple en comptant les pistes traversées, suivi éventuellement de corrections jusqu'à la détection du bloc considéré n. Le positionnement rapide, et dans une certaine mesure le positionnement plus lent, est aléatoire à la piste près : ceci peut être mis à profit si la double spirale se prolonge autour de l'adresse n suffisamment loin pour atteindre la zone d'atterrissage la plus probable du système de lecture.

Cependant, puisqu'une adresse n se trouve à la fois sur la piste secondaire et sur la piste principale selon que lors de la recherche la tête de lecture du disque se déplace du centre du disque vers la périphérie ou le contraire, elle trouvera en premier soit l'adresse n de la piste secondaire, soit l'adresse n de la piste principale. Le système de lecture peut donc être programmé de façon que pour la recherche de types d'adresses qui existent deux fois dans le disque, on fasse deux recherches : une recherche avec un déplacement de la tête de lecture du centre du disque vers la périphérie et une recherche de la périphérie du disque vers le centre. Ainsi on atteindra obligatoirement les deux adresses n et on pourra lire les blocs situés à ces adresses.

Une autre méthode consiste également à commander la lecture de l'adresse n+i de la piste principale proche de la zone n, puis de l'adresse n. Ensuite, à commander la lecture de l'adresse n-i de la piste principale également proche de la zone n, puis de l'adresse n. De cette façon, si la piste secondaire est courte (moins d'un tour du disque) on atteindra les deux adresses n de la piste secondaire et de la piste principale.

On va maintenant décrire la lecture de pistes principale et secondaire possédant un embranchement tel que représenté par les figures 2a à 2c.

Supposons qu'une piste principale se dédouble en un point donné en deux pistes filles (une piste principale et d'une piste secondaire). A priori, chaque système particulier va se diriger soit d'un côté, soit de l'autre de manière répétitive. Cependant, pour chaque système, une géométrie particulière induira une orientation aléatoire entre les branches. Un nombre limité de géométries d'embranchements permet d'avoir la géométrie « aléatoire » de la plus grande partie des systèmes du marché.

Afin de limiter la perturbation du système au passage de l'embranchement, il est aisé d'inscrire les mêmes données de manière parfaitement synchrones sur les deux branches tant que celles-ci sont proches.

Si l'on décide d'intervenir de manière fine dans le fonctionnement du lecteur, il est possible d'introduire un léger biais sur l'actuateur de suivi de piste à chaque passage successivement dans une direction et dans l'autre afin d'aider l'orientation sur une branche ou l'autre.

De toute façon, une manière quasi-sûre de lire les deux adresses n situées sur la piste secondaire et sur la piste principale est de lire plusieurs fois les données situées à ces adresses, de les enregistrer et de les comparer. Lorsqu'on constate qu'on a lu des données différentes à deux adresses n, on en déduit qu'on a lu la piste secondaire et la piste principale.

Enfin, on va expliquer le cas de la lecture d'une piste secondaire dont les adresses ou adresses de blocs, n'existe pas sur la piste principale.

Ce cas est représenté par la figure 3.

Supposons qu'un disque supporte au moins localement deux spirales imbriquées. La piste principale porte sur un tour, par exemple, les adresses contiguës de n à n+i, puis sur un second tour de n+2i+1 à n+3i ... La piste secondaire porte les adresses de n+i+1 à n+2i de manière à ce que cette section soit « prise en sandwich » entre les deux sections considérées de la piste principale. Le logiciel examine le comportement de la tête de lecture lors de la lecture des trois séries d'adresses. Les sauts de pistes sont caractéristiques de l'implantation des blocs ; notamment, si l'on demande la lecture des blocs n à n+3i, le signal de suivi de piste fin et/ou grossier portent la signature des deux sauts nécessaires pour recouvrer l'ensemble des blocs.

Le disque de l'invention permet d'introduire une part d'aléatoire lors de la lecture de données sur un disque enregistré suivant l'invention. Par exemple, un lecteur quelconque du marché, lorsque le programme lui commandera de lire le secteur particulier du disque codé suivant la méthode proposée, lira parfois un jeu de données A et parfois un autre jeu B.

Par contre, ce disque CD ou DVD, recopié par des moyens classiques même sophistiqués, contiendra un seul jeu de données. Le programme en tentant un certain nombre d'accès au secteur considéré pourra alors déterminer si les données relues sont toujours les mêmes, que le disque est une copie ; si elles sont parfois A, parfois B, que le disque est un original.

L'intérêt de cette conception de disque est qu'il est compatible avec tous les lecteurs de CD-ROM existants du marché sans même avoir besoin d'aller modifier le fonctionnement logiciel de ceux-ci (Driver).

Dans la variation de réalisation des figures 5a et 5b on considère que la piste principale est la piste Pp et que des informations sont inscrites sur des pistes secondaires Ps1, ... Psn. On considère par exemple que la piste Psn représente un secteur (ou un bloc) et qu'elle contient un bloc d'adresse A telle que ce secteur devrait se trouver sur la piste Ps1. On doit donc considérer que le bloc A a été déplacé et n'est pas à sa place logique. Le système de lecture normale du disque n'aura donc pas la possibilité de retrouver ce secteur. Pour pallier ce problème, l'invention prévoit sur différentes pistes voisines d'inscrire des informations permettant de retrouver l'adresse A. Par exemple, la piste Ps1 contient l'adresse A et associée à cette adresse, une information a1 indiquant de faire en saut de 3 pistes vers l'extérieur du disque pour trouver l'adresse A ; la piste Ps2 contient également l'adresse A et une information a2 indiquant de faire un saut de 2 pistes vers l'extérieur du disque ; ... la piste Psn+2 contient l'adresse A et une information a5 indiquant de faire un saut de 2 pistes vers l'intérieur du disque. Donc, selon l'invention, les informations a1, a2, ... a5 contiennent des informations de positionnement donnant le chemin à suivre pour trouver le segment à lire. Ces informations sont assimilables à des informations « mécaniques » à la différence des informations logiques.

Dans la description de la figure 5a, on a considéré que la piste Pp est une piste principale et que les autres pistes sont des pistes secondaires. On peut également considérer que toutes les pistes sont des pistes principales. De toute façon, le système est agencé de façon que les pistes contenues dans une couronne englobant une piste contenant un bloc d'adresses telle que A comporte des informations de commande de la tête de lecture telles que les informations a1, a2, ... a5 précédentes.

Nous allons décrire le fonctionnement d'un tel disque comprenant un grand nombre de segments de piste, suivant l'invention :

Ainsi que précisé ci-dessus, il est nécessaire d'avoir des informations sur la topographie du disque pour accéder aux informations. Celles-ci peuvent être présentes sur une zone du disque pour accéder aux informations. Celles-ci peuvent être présentes sur une zone du disque, par exemple de manière codée. Ces informations peuvent être également dispersées sur l'ensemble de la zone modifiée.

Un dispositif optique du type lecteur de Compact Disc par exemple, utilise des moyens de positionnement grossier de la tête de lecture et des moyens électromécaniques et/ou électrooptiques de suivi de piste et de saut de piste assurent le positionnement exact du spot de lecture sur le segment de piste à lire.

Lors d'une recherche d'information sur le disque suivant l'invention, le pick-up est envoyé par le fonctionnement grossier dans une zone comprenant un grand nombre de fractions de piste. Il n'est pas possible de connaître précisément la position du pick-up sur le disque ; par contre, le segment de piste relu contient des informations utilisateur, et également des informations de positionnement donnant le chemin (par exemple le nombre de sauts de pistes et leur direction) pour atteindre les informations portées sur un ou plusieurs segments de pistes proches. Cette information sur le chemin à suivre est spécifique du segment relu. En conséquence, un nombre raisonnable d'accès ne permet pas de remonter à une cartographie complète du disque, première étape vers la recopie illicite du contenu.

Par contre, l'accès à une information intéressant l'utilisateur sur le disque suivant l'innovation se fait en un temps sensiblement égal au temps d'accès sur un disque classique.

Cette conception de disque permet donc d'identifier un disque original et un disque copié par un pirate, même équipé de moyens importants.

Elle ne fait pas intervenir de clé type « dongle », ni de code, ni d'interaction entre le fournisseur et le client.

La lecture d'un tel disque est compatible avec le fonctionnement mécanique optique et électrique des lecteurs de CD.ROM, il peut par contre être nécessaire de modifier le fonctionnement logiciel (driver).

## Revendications

1. Disque d'enregistrement optique d'informations comprenant une piste d'enregistrement principale (Pp) continue enregistrée sous forme d'une spirale comportant une pluralité de segments de spires quasiment concentriques, lesdites informations étant réparties en blocs identifiés par des adresses respectives, ledit disque comportant en outre au moins une piste secondaire (Ps), insérée entre des tours successifs de ladite piste principale, en parallèle avec celle-ci, **caractérisé en ce que** la piste secondairesupporte également des blocs, **en ce que** les adresses des blocs ne sont pas disposées de façon séquentielle sur une piste unique et **en ce qu'**une adresse (n) se trouve à la fois sur la piste principale et sur la piste secondaire.

2. Disque selon la revendication 1, **caractérisé en ce que** la piste principale et la ou les pistes secondaires comportent des informations situées dans le même secteur angulaire du disque.

3. Disque selon l'une des revendications 1 ou 2, **caractérisé en ce que** dans le même secteur angulaire, ladite piste secondaire ainsi que les tours voisins de ladite piste principale contiennent des informations.

4. Disque selon l'une quelconque des revendications 1 à 3, **caractérisé en ce que** la ou les pistes secondaires sont plus courtes que la piste principale.

5. Disque selon l'une quelconque des revendications précédentes, **caractérisé en ce que** la ou les pistes secondaires ont une longueur inférieure à un tour adjacent de spirale de la piste principale.

6. Disque selon l'une quelconque des revendications précédentes, **caractérisé en ce que** la ou les pistes secondaires contiennent des informations différentes de celles de la piste principale.

7. Disque selon la revendication 6, **caractérisé en ce que** la ou les pistes secondaires contiennent des informations nécessaires pour le fonctionnement d'un logiciel enregistré sur le disque.

8. Disque selon l'une quelconque des revendications précédentes, **caractérisé en ce que** l'adresse du début de la ou des pistes secondaires a la même adresse qu'un bloc de la piste principale.

9. Disque selon l'une quelconque des revendications précédentes, **caractérisé en ce que** la piste principale est sous forme d'une spirale dont le pas des pistes est variable de façon à prévoir un pas plus grand dans la zone destinée à contenir une piste secondaire.

10. Disque selon la revendication 1, **caractérisé en ce que** la ou les pistes secondaires sont reliées à la piste principale par un aiguillage en « Y ».

11. Disque d'enregistrement optique d'informations comprenant une piste d'enregistrement principale (Pp) enregistrée sous forme d'une spirale comportant une pluralité de segments de spires quasiment concentriques, lesdites informations étant réparties en blocs identifiés par des adresses respectives, ladite piste principale comportant une ou plusieurs interruptions et des changements de spires donnant lieu à une ou plusieurs pistes secondaires (Ps1, Ps2, ..., Psn, Psn+1, Psn+2), insérée entre des tours successifs de ladite piste principale, en parallèle avec celle-ci, **caractérisé en ce que** ladite piste secondaire supporte également des blocs, **en ce que** les adresses des blocs ne sont pas disposées de façon séquentielle sur une piste unique, et **en ce qu'**une adresse (A) se trouve à la fois sur la piste principale et sur la piste secondaire.

12. Disque selon la revendication 11, **caractérisé en ce que** la piste principale et la ou les pistes secondaires comportent des informations situées dans le même secteur angulaire du disque.

13. Disque selon la revendication 12, **caractérisé en ce que** dans le même secteur angulaire, ladite piste secondaire ainsi que les tours voisins de ladite piste principale contiennent des informations.

14. Disque selon l'une des revendications 12 ou 13, **caractérisé en ce que** des secteurs déterminés de la piste contiennent des informations de positionnement permettant d'accéder à un bloc ou secteur déplacé par rapport à sa place normale sur le disque.

15. Disque selon la revendication 11, **caractérisé en ce que** les segments de spires constituant une couronne incorporant un segment de spire où se trouve un bloc d'une adresse déterminée (A) contiennent chacun ladite adresse à laquelle est associée une information de commande d'une tête de lecture du disque.

16. Disque selon la revendication 15, **caractérisé en ce qu'**une information de positionnement associée à une adresse d'un bloc ou secteur déterminé et contenue dans un segment de piste comporte une indication représentant le nombre de pistes séparant ledit segment de piste du segment de piste où est localisé ledit bloc ou secteur déterminé.

17. Disque selon la revendication 16, **caractérisé en ce que** l'information de positionnement est une information de saut de piste permettant de commander le déplacement de la tête de lecture du disque.

18. Disque selon la revendication l'une quelconque des revendications 13 à 19, **caractérisé en ce que** la ou les pistes secondaires sont plus courtes que la piste principale.

19. Disque. selon l'une quelconque des revendications 11 à 19, **caractérisé en ce que** la ou les pistes secondaires ont une longueur inférieure à un tour adjacent de spirale de la piste principale.

20. Procédé de lecture d'un disque d'enregistrement optique d'informations selon la revendication 1, **caractérisé en ce qu'**on prévoit la recherche d'une adresse n existant à la fois sur la piste secondaire et sur la piste principale en faisant une première recherche par déplacement de la tête de lecture du centre du disque vers la périphérie et une deuxième recherche par déplacement de la tête de lecture de la périphérie vers le centre du disque.

21. Procédé de lecture selon la revendication 20, **caractérisé en ce qu'**on commande, lors d'une première étape, une recherche de l'adresse (n-i) située sur une spire de la piste principale située entre l'adresse n et le centre du disque, puis la recherche de l'adresse n, puis, lors d'une deuxième étape, une recherche de l'adresse (n+i) située sur une spire de la piste principale située entre l'adresse n et la périphérie du disque, puis la recherche de l'adresse n.

22. Procédé de lecture d'un disque d'enregistrement optique d'informations selon la revendication 1, **caractérisé en ce qu'**on effectue plusieurs lectures des données situées à des adresses (n) se trouvant sur la piste secondaire et sur la piste principale et qu'on enregistre les données lues, jusqu'à ce qu'on détecte la lecture de données différentes.

23. Procédé de lecture selon la revendication 22, **caractérisé en ce que** ladite piste secondaire étant reliée à la piste principale par un aiguillage en « Y », on commande le suivi de piste par la tête de lecture en privilégiant, dans une première étape, l'orientation vers une branche de l'aiguillage, puis, dans une deuxième étape, l'orientation vers l'autre branche de l'aiguillage.

## Patentansprüche

1. Platte für die optische Aufzeichnung von Informationen, mit einer kontinuierlichen Hauptaufzeichnungsspur (Pp), die in Form einer Spirale, die mehrere nahezu konzentrische Windungssegmente aufweist, aufgezeichnet ist, wobei die Informationen auf Blöcke verteilt sind, die durch jeweilige Adressen **gekennzeichnet** sind, wobei die Platte außerdem wenigstens eine sekundäre Spur (Ps) umfaßt, die zwischen aufeinanderfolgende Windungen der Hauptspur parallel hierzu eingefügt sind, **dadurch gekennzeichnet, daß** die sekundäre Spur ebenfalls Blöcke unterstützt, daß die Adressen der Blöcke auf einer einzigen Spur nicht sequentiell angeordnet sind und daß sich eine Adresse (n) sowohl auf der Hauptspur als auch auf der sekundären Spur befindet.

2. Platte nach Anspruch 1, **dadurch gekennzeichnet, daß** die Hauptspur und die sekundäre(n) Spur(en) Informationen enthalten, die sich im selben Winkelsektor der Platte befinden.

3. Platte nach einem der Ansprüche 1 oder 2, **dadurch gekennzeichnet, daß** die sekundäre Spur sowie die benachbarten Windungen der Hauptspur im selben Winkelsektor Informationen enthalten.

4. Platte nach einem der Ansprüche 1 bis 3, **dadurch gekennzeichnet, daß** die sekundäre(n) Spur(en) kürzer als die Hauptspur ist (sind).

5. Platte nach einem der vorhergehenden Ansprüche, **dadurch gekennzeichnet, daß** die sekundäre(n) Spur(en) eine Länge besitzt (besitzen), die kürzer als eine benachbarte Spiralwindung der Hauptspur ist.

6. Platte nach einem der vorhergehenden Ansprüche, **dadurch gekennzeichnet, daß** die sekundäre(n) Spur(en) Informationen enthält (enthalten), die von jenen der Hauptspur verschieden sind.

7. Platte nach Anspruch 6, **dadurch gekennzeichnet, daß** die sekundäre(n) Spur(en) Informationen enthält (enthalten), die für die Funktion einer auf die Platte aufgezeichneten Software erforderlich sind.

8. Platte nach einem der vorhergehenden Ansprüche, **dadurch gekennzeichnet daß** die Anfangsadresse der sekundären Spur(en) die gleiche Adresse wie ein Block der Hauptspur hat.

9. Platte nach einem der vorhergehenden Ansprüche, **dadurch gekennzeichnet, daß** die Hauptspur die Form einer Spirale hat, bei der die Schrittweite der Spuren in der Weise variabel ist, daß in der Zone, die dazu vorgesehen ist, eine sekundäre Spur aufzunehmen, eine größere Schrittweite vorgesehen ist.

10. Platte nach Anspruch 1, **dadurch gekennzeichnet, daß** die sekundäre(n) Spur(en) mit der Hauptspur durch eine "Y"-förmige Verzweigung verbunden ist (sind).

11. Platte für die optische Aufzeichnung von Informationen, mit einer Hauptaufzeichnungsspur (Pp), die in Form einer Spirale aufgezeichnet ist, die mehrere nahezu konzentrische Windungssegmente umfaßt, wobei die Informationen auf Blöcke verteilt sind, die durch jeweilige Adressen **gekennzeichnet** sind, wobei die Hauptspur eine oder mehrere Unterbrechungen und Änderungen von Windungen aufweist, die Anlaß für eine oder mehrere sekundäre Spuren (Ps1, Ps2, ... Psn, Psn + 1, Psn + 2) geben, die zwischen aufeinanderfolgende Windungen der Hauptspur parallel hierzu eingefügt sind, **dadurch gekennzeichnet, daß** die sekundäre Spur ebenfalls Blöcke unterstützt, daß die Adressen der Blöcke auf einer einzigen Spur nicht sequentiell angeordnet sind und daß sich eine Adresse (A) sowohl auf der Hauptspur als auch auf der sekundären Spur befindet.

12. Platte nach Anspruch 11, **dadurch gekennzeichnet, daß** die Hauptspur und die sekundäre(n) Spur(en) Informationen enthalten, die sich im selben Winkelsektor der Platte befinden.

13. Platte nach Anspruch 12, **dadurch gekennzeichnet, daß** die sekundäre Spur sowie die benachbarten Windungen der Hauptspur im selben Winkelsektor Informationen enthalten.

14. Platte nach einem der Ansprüche 12 oder 13, **dadurch gekennzeichnet, daß** bestimmte Sektoren der Spur, die Positionsinformationen enthalten, den Zugriff auf einen Block oder Sektor ermöglichen, der gegenüber seinem normalen Ort auf der Platte versetzt ist.

15. Platte nach Anspruch 11, **dadurch gekennzeichnet, daß** die Windungssegmente, die einen Kreisring bilden, der ein Windungssegment enthält, in dem sich ein Block mit einer bestimmten Adresse (A) befindet, jeweils jene Adresse enthalten, der Steuerinformation eines Lesekopfs der Platte zugeordnet ist.

16. Platte nach Anspruch 15, **dadurch gekennzeichnet, daß** Positionsinformationen, die einer Adresse eines bestimmten Blocks oder Sektors zugeordnet und in einem Spursegment enthalten sind, eine Angabe enthalten, die die Anzahl von Spuren repräsentiert, die dieses Spurensegment von jenem Spurensegment trennen, in dem sich der bestimmte Block oder Sektor befindet.

17. Platte nach Anspruch 16, **dadurch gekennzeichnet, daß** die Positionsinformation Spursprunginformationen sind, die ermöglichen, die Verlagerung des Lesekopfes der Platte zu steuern.

18. Platte nach einem der Ansprüche 13 bis 19, **dadurch gekennzeichnet, daß** die sekundäre(n) Spur(en) kürzer ist (sind) als die Hauptspur.

19. Platte nach einem der Ansprüche 11 bis 19, **dadurch gekennzeichnet, daß** die sekundäre(n) Spur(en) eine Länge besitzt (besitzen), die kürzer als eine benachbarte Spiralwindung der Hauptspur ist.

20. Verfahren zum Lesen einer Platte für die optische Aufzeichnung von Informationen nach Anspruch 1, **dadurch gekennzeichnet, daß** das Suchen einer Adresse n vorgesehen ist, die sowohl auf der sekundären Spur als auch auf der Hauptspur vorhanden ist, indem eine erste Suche durch Verlagern des Lesekopfes vom Zentrum der Platte zu ihrem Umfang und eine zweite Suche durch Verlagern des Lesekopfes vom Umfang zum Zentrum der Platte ausgeführt werden.

21. Leseverfahren nach Anspruch 20, **dadurch gekennzeichnet, daß** bei einem ersten Schritt eine Suche der Adresse (n - i), die sich auf einer Windung der Hauptspur befindet, die sich zwischen der Adresse n und dem Zentrum der Platte befindet, und dann die Suche der Adresse n gesteuert werden und daß anschließend bei einem zweiten Schritt eine Suche der Adresse (n + i), die sich auf einer Windung der Hauptspur befindet, die sich zwischen der Adresse n und dem Umfang der Platte befindet, und dann die Suche der Adresse n gesteuert werden.

22. Verfahren zum Lesen einer Platte für die optische Aufzeichnung von Informationen nach Anspruch 1, **dadurch gekennzeichnet, daß** mehrmals Lesevorgänge von Daten ausgeführt werden, die sich bei Adressen (n) befinden, die sich ihrerseits auf der sekundären Spur und auf der Hauptspur befinden, und daß die gelesenen Daten aufgezeichnet werden, bis das Lesen anderer Daten erfaßt wird.

23. Leseverfahren nach Anspruch 22, **dadurch gekennzeichnet, daß**, da die sekundäre Spur mit der Hauptspur durch eine "Y"-förmige Verzweigung verbunden ist, die Spurverfolgung durch den Lesekopf dadurch gesteuert wird, daß in einem ersten Schritt die Ausrichtung auf einen Zweig der Verzweigung und dann in einem zweiten Schritt die Ausrichtung auf den anderen Zweig der Verzweigung begünstigt werden.

## Claims

1. Optical recording information disk for comprising a continuous main recording track (Pp) recorded in the form of a spiral comprising a plurality of segments of almost concentric turns, the said information being distributed as blocks identified by respective addresses, the said disc furthermore comprising at least one secondary track (Ps), inserted between successive loops of the said main track, in parallel with the latter, **characterized in that** the secondary track also supports blocks, **in that** the addresses of the blocks are not arranged sequentially on a single track and **in that** an address (n) is located both on the main track and on the secondary track.

2. Disk according to Claim 1, **characterized in that** the main track and the secondary track or tracks comprise information situated in the same angular sector of the disk.

3. Disk according to Claims 1 and 2, **characterized in that** in the same angular sector, the said secondary track as well as the neighbouring revolutions of the said main track contain information.

4. Disk according to any one of Claims 1 to 3, **characterized in that** the secondary track or tracks are shorter than the main track.

5. Disk according to any one of the preceding claims, **characterized in that** the secondary track or tracks have a length less than one adjacent revolution of the spiral of the track.

6. Disk according to any one of the preceding claims, **characterized in that** the secondary track or tracks contain different information from that of the main track.

7. Disk according to Claim 6, **characterized in that** the secondary track or tracks contain information necessary for the operation of software recorded on the disc.

8. Disk according to any one of the preceding claims, **characterized in that** the address of the start of the secondary track or tracks has the same address as a block of the main track.

9. Disk according to any one of the preceding claims, **characterized in that** the main track is in the form of a spiral, the pitch of whose tracks is variable in such a way as to provide a larger pitch in the area intended to contain a secondary track.

10. Disk according to Claim 1, **characterized in that** the secondary track or tracks are linked to the main track by a "Y"-shaped switchpoint.

11. Optical disk for recording information comprising a main recording track (Pp) recorded in the form of a spiral comprising a plurality of segments of almost concentric turns, the said information being distributed as blocks identified by respective addresses, the said main track comprising one or more interruptions and changes of turns giving rise to one or more secondary tracks (Ps1, Ps2, ..., Psn, Psn+1, Psn+2) inserted between successive loops of the said main track, in parallel with the latter, **characterized in that** the said secondary track also supports blocks, **in that** the addresses of the blocks are not arranged sequentially on a single track and **in that** an address (A) is located both on the main track and on the secondary track.

12. Disk according to Claim 11, **characterized in that** the main track and the secondary track or tracks comprise information situated in the same angular sector of the disk.

13. Disk according to Claim 12, **characterized in that** in the same angular sector, the said secondary track as well as the neighbouring revolutions of the said main track contain information.

14. Disk according to one of Claims 12 and 13, **characterized in that** specified sectors of the track contain positioning information making it possible to access a block or sector moved with respect to its normal place on the disk.

15. Disk according to Claim 11, **characterized in that** the segments of turns constituting a ring incorporating a segment of turn in which a block with a specified address (A) is located each contain the said address with which is associated an information item for controlling a disk reading head.

16. Disk according to Claim 15, **characterized in that** a positioning information item associated with an address of a specified block or sector and contained in a segment of track comprises an indication representing the number of tracks separating the said segment of track from the segment of track in which the said specified block or sector is localized.

17. Disk according to Claim 16, **characterized in that** the positioning information item is a track jump information item making it possible to instruct the disk reading head to move.

18. Disk according to any one of Claims 13 to 19, **characterized in that** the secondary track or tracks are shorter than the main track.

19. Disk according to any one of Claims 11 to 19, **characterized in that** the secondary track or tracks have a length less than one adjacent revolution of the spiral of the main track.

20. Process for reading an optical disk for recording information according to Claim 1, **characterized in that** provision is made to search for an address n existing both on the secondary track and on the main track by effecting a first search by moving the reading head from the centre of the disk towards the periphery and a second search by moving the reading head from the periphery towards the centre of the disk.

21. Reading process according to Claim 20, **characterized in that**, during a first step, a search is made for the address (n-i) situated on a turn of the main track situated between the address n and the centre of the disk, then a search is made for the address n, then during a second step, a search is made for the address (n + i) situated on a turn of the main track situated between the address n and the periphery of the disk, and then the search is made for the address n.

22. Process for reading an optical disk for recording information according to Claim 1, **characterized in that** several reads are performed on the data situated at addresses (n) located on the secondary track and on the main track and **in that** the data read are recorded until the reading of different data is detected.

23. Process for reading a disk according to Claim 22, **characterized in that**, the said secondary track being linked to the main track by a "Y"-shaped switchpoint, the reading head is caused to track in such a way as to favour, in a first step, orientation towards one branch of the switchpoint, and then in a second step, orientation towards the other branch of the switchpoint.
